# EUROPEAN PATENT APPLICATION

(11) **EP 4 098 635 A1**
(43) Date of publication of application: **07.12.2022**
(21) Application number: 21305758.1
(22) Date of filing: 04.06.2021
(51) Int. Cl.: C04B 28/00, E05G 1/00, C04B 111/10, C04B 111/20, C04B 111/28

(54) **ANTI-BREAKING ELEMENT COMPRISING A GEOPOLYMER COMBINING FIRE RESISTANCE AND BREAK-IN RESISTANCE**

(71) Applicant: ImerTech SAS, 75015 Paris (FR)
(72) Inventor: Autef, Alexandre, 87420 Saint Victurnien (FR); Perronnet, Murielle, 31120 Portet Sur Garonne (FR)
(74) Representative: Haseltine Lake Kempner LLP

(57) **Abstract**

The present disclosure relates to an anti-breaking element comprising a geopolymer, a process for preparing an anti-breaking element, the process comprising: a) providing the skeleton of an anti-breaking element; b) preparing a geopolymer formulation; c) casting the geopolymer formulation of step b) into the skeleton of the anti-breaking element of step a); and d) optionally, removing the skeleton. The present disclosure further relates to the use of a geopolymer as part of an anti-breaking element.

## Description

### FIELD OF THE INVENTION

The present disclosure relates to an anti-breaking element comprising a geopolymer, a process for the preparation thereof and the use of a geopolymer as part of an anti-breaking element.

### BACKGROUND OF THE INVENTION

Strong boxes are secure lockable boxes used for securing valuable objects against burglary and/or damage from fire. Typically, the body and door thereof comprise anti-breaking element(s) which may be cast from metal and/or from hollow metal bodies filled with concrete, usually based on calcium-silicate and/or calcium-aluminate based cement. Strong rooms are larger, equipped with strong room door(s) to secure valuables from burglary and may additionally be used for protecting persons, e.g., in form of a panic room.

In general, concrete has a poor fire resistance, especially above 250°C, at which the departure of the structural water causes a very strong degradation of the structure of the matrix and leads to a drop in mechanical properties. For high temperatures, in particular those reached in the event of a fire, the hydrated cement in the concrete gradually dehydrates, and returns to a powder state and of water in vapour form. This results in a reduction in the strength and modulus of elasticity (stiffness) of the concrete. In some fires, concrete crumbling occurs and fragments of concrete break off from the remains of the concrete, sometimes violently. Thus, for the targeted application, this behaviour upon heating represents a huge weakness at allows a third party to use a thermal attack to weaken the material, followed by a mechanical attack, e.g., with a drill.

It is possible to modify concrete to improve its fire resistance. However, the break-in resistance (resistance against burglary) of such concretes is low. When attempting to increase the break-in resistance of such concretes, the fire resistance usually deteriorates. Therefore, a concrete that simultaneously exhibits good fire resistance and good break-in resistance is rather elusive.

Hence, an anti-breaking element which does not have the disadvantageous properties of concrete would be desired.

### SUMMARY OF THE INVENTION

The present invention is defined in the appended claims.

In accordance with a first aspect, there is provided an anti-breaking element comprising a geopolymer.

In accordance with a second aspect, there is provided a process for preparing an anti-breaking element, the process comprising:
a) providing the skeleton of an anti-breaking element;
b) preparing a geopolymer formulation;
c) casting the geopolymer formulation of step b) into or on the skeleton of the anti-breaking element of step a); and
d) optionally, removing the skeleton.

In accordance with a third aspect, there is provided an anti-breaking element according to the first aspect prepared by the process according to the second aspect.

In accordance with a fourth aspect, there is provided the use of a geopolymer as part of an anti-breaking element.

Certain embodiments of the present invention may provide one or more of the following advantages:
- desired fire resistance
- desired break-in resistance (resistance to burglary)
- desired mechanical properties
- desired combination of good fire resistance and break-in resistance
- possibility to replace concrete in current anti-breaking elements and their applications
- desired ease of production using known methods and devices

The details, examples and preferences provided in relation to any particular one or more of the stated aspects of the present invention apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

The present invention is based on the surprising finding that geopolymers are suitable for preparing anti-breaking elements and the resulting elements often exhibit good fire resistance and good break-in resistance. In one embodiment, the anti-breaking element is a strong box element, a strong room element, an armoured door and/or an armoured wall.

### Anti-breaking element

An anti-breaking element is an element which protects against the burglary, i.e. which is able to retard breakage and/or the access to the interior, of a room or a box comprising the anti-breaking element.

As outlined above, a strong box/strong room is a secure lockable box/room used for securing valuable objects against burglary and/or damage from fire and/or protecting individuals, e.g., in form of a panic room. They usually have the form of a hollow cuboid or cylinder, with one face being removable or hinged to form a door. The anti-breaking element according to the present disclosure is suitable for forming a strong box element, a strong room element, an armoured door and/or an armoured wall, for example, the walls as well as the door of a strong box or a strong room, or an ATM safe. Hence, the anti-breaking element according to the present disclosure provides the fire resistance and/or break-in resistance required for strong boxes/strong rooms, armoured doors/armoured walls and ATM safes. In the present disclosure, the term "wall" in conjunction with strong boxes, strong rooms and ATM safes includes the top and bottom wall of the strong box, strong room and ATM safe, respectively, such as the floor and ceiling of a strong room and the door(s) of the strong box, strong room and ATM safe, respectively. Depending on the size and place where the strong box, strong room or ATM safe is located, it may not be required that all walls are made of a fire resistant and/or break-in resistant material. For example, a strong room may be located on a part of a building, wherein the floor of the building already provides for the necessary fire resistance and/or break-in resistance.

In one embodiment, the anti-breaking element comprises at least 10% v/v of the geopolymer, at least 20% v/v of the geopolymer, at least 30% v/v of the geopolymer, at least 40% v/v of the geopolymer, at least 50% v/v of the geopolymer, at least 60% v/v of the geopolymer, at least 70% v/v of the geopolymer, at least 80% v/v of the geopolymer, or at least 90% v/v of the geopolymer, based on the volume of the anti-breaking element.

In one embodiment, the total thickness of the anti-breaking element according to the present disclosure is at least about 2.0 cm, for example at least about 5.0 cm or at least about 10 cm. In one embodiment, the total thickness of the anti-breaking element according to the present disclosure is not more than 100 cm, for example not more than 80 cm, for example not more than 50 cm.

In one embodiment, the anti-breaking element of the present disclosure forms all the walls of a strong box, strong room or ATM safe.

According to the present disclosure a strong box, strong room and/or ATM safe comprises the anti-breaking element according to the present disclosure, wherein the anti-breaking element is a strong box element, a strong room element, an armoured door and/or an armoured wall according to the present disclosure. In one embodiment, at least one wall and/or at least one door of the strong box, the strong room or the ATM safe comprises, or essentially consist of, or consists of, the anti-breaking element according to the present disclosure, wherein the anti-breaking element is a strong box element, a strong room element, an armoured door and/or an armoured wall according to the present disclosure. In another embodiment, the walls and the door(s) of the strong box, the strong room or the ATM safe comprise, or essentially consist of, or consists of, the anti-breaking element according to the present disclosure, wherein the anti-breaking element is a strong box element, a strong room element, an armoured door and/or an armoured wall according to the present disclosure.

The dimensions of the strong box, strong room and/or ATM safe according to the present disclosure are not particularly limited and may each range from ten centimetres to several meters. For example, the height may be from about 400 mm to about 2160 mm, the width from about 720 mm to about 1560 mm and the depth from about 640 mm to about 1320 mm, or the height may be from about 500 mm to about 1800 mm, the width from about 900 mm to about 1300 mm and the depth from about 800 mm to about 1100 mm, or the height may be from about 600 mm to about 1440 mm, the width from about 1000 mm to about 1200 mm and the depth from about 900 mm to about 1000 mm.

In an embodiment, the anti-breaking element according to the present disclosure has a fire resistance, determined according to NF EN 1047-1:2019, of at least S 60 P. For example, the fire resistance determined according to determined according to NF EN 1047-1:2019 is at least S 60 D, or at least S 60 DIS or at least DI 60 P/DIS. In another embodiment, the anti-breaking element according to the present disclosure has a fire resistance, determined according to NF EN 1047-1:2019, of at least S 120 P, or at least S 120 D, or at least S 120 DIS or at least DI 120 P/DIS. The specimen for performing the test according to NF EN 1047-1:2019 on the anti-breaking element according to the present disclosure is a cylindrical specimen of the ant-breaking element having a diameter of 10 cm and a height of 10 cm. A measuring devices as set forth in NF EN 1047-1:2019 is placed in the middle of the cylinder by drilling a hole into the centre and sealing the hole with a silicon sealant or similar material such as the material used in section 6.3.1.5 of NF EN 1047-1:2019 for sealing gaps around the cables.

In an embodiment, the anti-breaking element according to the present disclosure, has a resistance to burglary, determined according to NF EN 1143-1:2019, of at least resistance grade 0 or at least a resistance grade of L. For example, a resistance to burglary, determined according to NF EN 1143-1:2019, is of at least resistance grade I, or of at least resistance grade II, or of at least resistance grade III, of at least resistance grade IV, or of at least resistance grade V, or of at least resistance grade VI, or of at least resistance grade VII or of at least resistance grade VIII, or of at least resistance grade IX, or of at least resistance grade X, or of at least resistance grade XI, or of at least resistance grade XII, or of at least resistance grade XIII. For the anti-breaking element according to the present disclosure the conditions for strong room doors and strong rooms according to NF EN 1143-1:2019 are applied. In case the anti-breaking element according to the present disclosure is an ATM safe, the respective grades are used. For example, an ATM safe has a resistance to burglary, determined according to NF EN 1143-1:2019, is of at least a resistance grade L. For example, a resistance to burglary, determined according to NF EN 1143-1:2019, is of at least resistance grade I, or of at least resistance grade II, or of at least resistance grade III, of at least resistance grade IV, or of at least resistance grade V, or of at least resistance grade VI, or of at least resistance grade VII or of at least resistance grade VIII. In this embodiment, the geopolymer comprised in anti-breaking element according to the present disclosure usually comprises metallic fibres as described in the present disclosure.

In an embodiment, the anti-breaking element according to the present disclosure fulfils the requirements for CD designation, determined according to the test conditions set forth in section 11.3 of NF EN 1143-1:2019.

In an embodiment, the anti-breaking element according to the present disclosure has a fire resistance of at least S 60 P, as determined according to NF EN 1047-1:2019, and a resistance to burglary of at least a resistance grade 0, determined according to NF EN 1143-1:2019. For example, the anti-breaking element according to the present disclosure has a fire resistance of at least S 60 D, or at least S 60 DIS or at least DI 60 P/DIS and a resistance to burglary of at least resistance grade I, or of at least resistance grade II, or of at least resistance grade III, of at least resistance grade IV, or of at least resistance grade V, or of at least resistance grade VI, or of at least resistance grade VII or of at least resistance grade VIII, or of at least resistance grade IX, or of at least resistance grade X, or of at least resistance grade XI, or of at least resistance grade XII, or of at least resistance grade XIII.

In an embodiment, the anti-breaking element according to the present disclosure has a fire resistance of at least S 120 P, as determined according to NF EN 1047-1:2019, and a resistance to burglary of at least a resistance grade 0, determined according to NF EN 1143-1:2019, for example, has a fire resistance of at least S 120 D, or at least S 120 DIS or at least DI 120 P/DIS and a resistance to burglary of at least resistance grade I, or of at least resistance grade II, or of at least resistance grade III, of at least resistance grade IV, or of at least resistance grade V, or of at least resistance grade VI, or of at least resistance grade VII or of at least resistance grade VIII, or of at least resistance grade IX, or of at least resistance grade X, or of at least resistance grade XI, or of at least resistance grade XII, or of at least resistance grade XIII.

In an embodiment, a strong box, such as a safe, a strong room and/or ATM safe comprising the anti-breaking element according to the present disclosure has a fire resistance determined according to NF EN 1143-1:2019 and/or a resistance to burglary determined according to NF EN 1143-1:2019 as defined for the anti-breaking element of the present disclosure above.

In an embodiment, the anti-breaking element according to the present disclosure is substantially free of calcium-silicate based cement as a reinforcing agent or a fireproof agent. In an embodiment, the anti-breaking element according to the present disclosure is substantially free of calcium-silicate based cement. In this context "substantially free" denotes that the anti-breaking element according to the present disclosure comprises less than about 5.0 wt.% of calcium-silicate based cement, e.g., as a reinforcing agent or a fireproof agent, based on the total weight of the anti-breaking element. For example, the anti-breaking element comprises less than about 4.5 wt.%, or less than about 4.0 wt.%, or less than about 3.5 wt.% , or less than about 3.0 wt.%, or less than about 2.5 wt.%, or less than about 2.0 wt.%, or less than about 1.5 wt.% or less than about 1.0 wt.%, or less than about 0.5 wt.%, or less than about 0.1 wt.% of calcium-silicate based cement, e.g., as a reinforcing agent or a fireproof agent, based on the total weight of the anti-breaking element. In an embodiment, the anti-breaking element according to the present disclosure is free of calcium-silicate based cement as a reinforcing agent or a fireproof agent. In another embodiment, the anti-breaking element according to the present disclosure is free of calcium-silicate based cement.

By calcium-silicate based cement is meant a cement comprising mostly calcium silicate, *i.e.,* at least 50 wt.% of calcium-silicate. For example it can be a Portland cement.

In an embodiment, the anti-breaking element according to the present disclosure is substantially free of calcium-aluminate based cement as a reinforcing agent or a fireproof agent. In an embodiment, the anti-breaking element according to the present disclosure is substantially free of calcium-aluminate based cement. In this context "substantially free" denotes that the anti-breaking element according to the present disclosure comprises less than about 5.0 wt.% of calcium-aluminate based cement, *e.g.,* as a reinforcing agent or a fireproof agent, based on the total weight of the anti-breaking element. For example, the anti-breaking element comprises less than about 4.5 wt.%, or less than about 4.0 wt.%, or less than about 3.5 wt.% , or less than about 3.0 wt.%, or less than about 2.5 wt.%, or less than about 2.0 wt.%, or less than about 1.5 wt.% or less than about 1.0 wt.%, or less than about 0.5 wt.%, or less than about 0.1 wt.% of calcium-aluminate based cement, *e.g.,* as a reinforcing agent or a fireproof agent, based on the total weight of the anti-breaking element. In an embodiment, the anti-breaking element according to the present disclosure is free of calcium-aluminate based cement as a reinforcing agent or a fireproof agent. In another embodiment, the anti-breaking element according to the present disclosure is free of calcium-aluminate based cement.

By calcium-aluminate based cement, also called aluminous cement, is meant a cement comprising mostly calcium aluminate, i.e. at least 50 wt.% of calcium-aluminate. For example it can be Ciment Fondu.

In an embodiment, the anti-breaking element according to the present disclosure is substantially free of calcium-silicate based cement and calcium-aluminate based cement as a reinforcing agent or a fireproof agent. In an embodiment, the anti-breaking element according to the present disclosure is substantially free of calcium-silicate based cement and calcium-aluminate based cement. In this context "substantially free" denotes that the anti-breaking element according to the present disclosure comprises less than about 5.0 wt.% of calcium-silicate based cement and calcium-aluminate based cement, *e.g.,* as a reinforcing agent or a fireproof agent, based on the total weight of the anti-breaking element. For example, the anti-breaking element according to the present disclosure comprises less than about 4.5 wt.%, or less than about 4.0 wt.%, or less than about 3.5 wt.% , or less than about 3.0 wt.%, or less than about 2.5 wt.%, or less than about 2.0 wt.%, or less than about 1.5 wt.% or less than about 1.0 wt.%, or less than about 0.5 wt.%, or less than about 0.1 wt.% of calcium-silicate based cement and calcium-aluminate based cement, *e.g.,* as a reinforcing agent or a fireproof agent, based on the total weight of the anti-breaking element. In an embodiment, the anti-breaking element according to the present disclosure is free of calcium-silicate based cement and calcium-aluminate based cement as a reinforcing agent or a fireproof agent. In another embodiment, the anti-breaking element according to the present disclosure is free of calcium-silicate based cement and calcium-aluminate based cement.

In one embodiment, the anti-breaking element according to the present disclosure is produced using a skeleton and/or comprises a skeleton. Said skeleton may be completely or partially removed after preparing the anti-breaking element, or may be retained in the anti-breaking element in the present disclosure. In one embodiment, the anti-breaking element according to the present disclosure comprises a skeleton. In one embodiment, the skeleton is a single-walled body or a double-walled body, such as a metal body, for example a steel body, a plastic body, a mould (for example a plastic, metal or refractory material mould), and/or a cage-like structure, for example a metal cage-like structure, for example a steel cage-like structure. A cage-like structure may be surrounded by removable covers on its outside, *e.g.,* plastic or metal covers. Thereby the cage-like structure may function as mould for casting the geopolymer as described below. In one embodiment, the skeleton is a double-walled body, for example a double-walled metal body. Skeletons suitable for concrete-filled anti-breaking elements are known in the art and also suitable for the anti-breaking element according to the present disclosure.

In one embodiment, the anti-breaking element according to the present disclosure comprises a skeleton, wherein the skeleton is at least partially covered with the geopolymer as defined in the present disclosure. In the present disclosure "at least partially covered with the geopolymer" means, at least 10% v/v of the geopolymer, at least 20% v/v of the geopolymer, at least 30% v/v of the geopolymer, at least 40% v/v of the geopolymer, at least 50% v/v of the geopolymer, at least 60% v/v of the geopolymer, at least 70% v/v of the geopolymer, at least 80% v/v of the geopolymer, at least 90% v/v of the geopolymer, at least 95% v/v of the geopolymer, at least 97% v/v of the geopolymer, at least 98% v/v of the geopolymer, at least 99% v/v of the geopolymer, at least 99.5% v/v of the geopolymer, or at least 99.9% v/v of the geopolymer, or at least 100% v/v of the geopolymer, at least 150% v/v of the geopolymer, at least 200% v/v of the geopolymer, at least 300% v/v of the geopolymer, at least 500% v/v of the geopolymer, at least 1000% v/v of the geopolymer, based on the volume of the skeleton. In some examples "at least partially covered with geopolymer" means that the skeleton is entirely covered with the geopolymer. In one embodiment, the skeleton is a single-walled body, for example a single-walled metal body.

In one embodiment, the anti-breaking element according to the present disclosure comprises a skeleton, and the skeleton is a double-walled skeleton, wherein the space inside this skeleton is at least partially filled with the geopolymer as defined in the present disclosure. In the present disclosure "at least partially filled with the geopolymer" means, at least 10% v/v of the geopolymer, at least 20% v/v of the geopolymer, at least 30% v/v of the geopolymer, at least 40% v/v of the geopolymer, at least 50% v/v of the geopolymer, at least 60% v/v of the geopolymer, at least 70% v/v of the geopolymer, at least 80% v/v of the geopolymer, at least 90% v/v of the geopolymer, at least 95% v/v of the geopolymer, at least 97% v/v of the geopolymer, at least 98% v/v of the geopolymer, at least 99% v/v of the geopolymer, at least 99.5% v/v of the geopolymer, or at least 99.9% v/v of the geopolymer based on the volume of the space within the skeleton. In some examples "at least partially filled with geopolymer" means that the space within the skeleton is entirely filled with the geopolymer. In one embodiment, the skeleton is a double walled body, for example a double-walled metal body.

In one embodiment, the skeleton forms all the walls of a strong box, strong room or ATM safe. For example, skeletons suitable for the anti-breaking element according to the present disclosure are skeletons suitable for concrete filled anti-breaking elements. In one variant of this embodiment, the skeleton is a double walled body, for example a double-walled metal body.

In one embodiment, the skeleton, such as the double-walled metal body, is made from steel. Suitable steels for anti-breaking elements are known in the art.

The thickness of the walls of the skeleton are selected depending on the application and safety requirements of the anti-breaking element. In an embodiment, the thickness of each of the walls of the skeleton is from about 0.5 mm to about 50.0 cm, preferably, from about 1.0 mm to about 40.0 cm, more preferably from about 1.0 mm to about 30.0 cm, for example, from about 1.0 mm to about 20.0 cm, from about 1.0 mm to about 10.0 cm, from about 1.0 mm to about 5.0 cm, from about 1.0 mm to about 1.0 cm, for example, from about 1.0 mm to about 3.0 mm.

In one embodiment, the skeleton may comprise reinforcements inside the space within the skeleton, which is at least partially filled with the geopolymer as defined in the present disclosure, or on the surface of the skeleton.

In an embodiment, the anti-breaking element according to the present disclosure has: a fire resistance, determined according to NF EN 1047-1:2019, of at least S 60 P; a resistance to burglary, determined according to NF EN 1143-1:2019, of at least resistance grade 0; and comprises less than about 5.0 wt.% of calcium-silicate based cement, as a reinforcing agent or a fireproof agent, based on the total weight of the anti-breaking element.

In an embodiment, the anti-breaking element according to the present disclosure has: a fire resistance, determined according to NF EN 1047-1:2019, of at least S 60 P; a resistance to burglary, determined according to NF EN 1143-1:2019, of at least resistance grade 0; and comprises less than about 5.0 wt.% of calcium-aluminate based cement, as a reinforcing agent or a fireproof agent, based on the total weight of the anti-breaking element.

In an embodiment, the anti-breaking element according to the present disclosure has: a fire resistance, determined according to NF EN 1047-1:2019, of at least S 60 P; a resistance to burglary, determined according to NF EN 1143-1:2019, of at least resistance grade 0; and comprises less than about 5.0 wt.% of calcium-silicate based cement and calcium-aluminate based cement, as a reinforcing agent or a fireproof agent, based on the total weight of the anti-breaking element.

In an embodiment, the anti-breaking element according to the present disclosure has a fire resistance, determined according to NF EN 1047-1:2019, of at least S 120 P; a resistance to burglary, determined according to NF EN 1143-1:2019, of at least III; and comprises less than about 5.0 wt.% of calcium-silicate based cement, as a reinforcing agent or a fireproof agent, based on the total weight of the anti-breaking element according to the present disclosure.

In another embodiment the anti-breaking element according to the present disclosure has: a fire resistance, determined according to NF EN 1047-1:2019, of at least S 60 D; a resistance to burglary, determined according to NF EN 1143-1:2019, of at least resistance grade III; and comprises less than about 3.0 wt.% of calcium-silicate based cement, as a reinforcing agent or a fireproof agent, based on the total weight of the anti-breaking element.

In yet another embodiment the anti-breaking element according to the present disclosure has: a fire resistance, determined according to NF EN 1047-1:2019, of at least S 120 D; a resistance to burglary, determined according to NF EN 1143-1:2019, of at least resistance grade VIII; and comprises less than about 1.0 wt.% of calcium-silicate based cement and calcium-aluminate based cement, as a reinforcing agent or a fireproof agent, based on the total weight of the anti-breaking element according to the present disclosure.

In yet another embodiment the anti-breaking element according to the present disclosure has: a fire resistance, determined according to NF EN 1047-1:2019, of at least S 120 D; has a resistance to burglary, determined according to NF EN 1143-1:2019, of at least resistance grade VIII; and is free of calcium-silicate based cement and calcium-aluminate based cement.

### Geopolymer

Geopolymers are inorganic, typically alumino-silicate-based networks. They are usually ceramic and non-crystalline (amorphous). In accordance with Fernandez-Jimenez A. et al. (Cement and Concrete Research, 35 (6), pages 1204 to 1209, 2005), a dissolution of a solid aluminosilicate by alkaline hydrolysis is the first reaction step and leads to the formation of aluminates and silicates. Once a formation equilibrium is obtained, a saturated solution is formed which leads to a network of oligomers that undergo polycondensation to form a three-dimensional network of aluminosilicates. The water used in this process is at least partially removed from the product.

In an embodiment, the sum of the total amounts of Al₂O₃, SiO₂, K₂O, Na₂O, Fe₂O₃, TiO₂, CaO, MgO, Na₂O and P₂O₅ make up at least about 75 wt.% of the geopolymer, for example at least about 85 wt.%, for example at least about 90 wt.%, or at least about 99 wt.% of the geopolymer.

Preferably, the geopolymer comprises from about 2 wt.% to about 30 wt.% Al₂O₃, for example from about 5 wt.% to about 25 wt.% Al₂O₃, preferably from about 10 wt.% to about 20 wt.% Al₂O₃, based on the total weight of the geopolymer.

Preferably, the geopolymer comprises from about 5 wt.% to about 70 wt.% SiO₂, for example from about 10 wt.% to about 60 wt.% SiO₂, for example from about 20 wt.% to about 55 wt.% SiO₂, for example from about 25 wt.% to about 45 wt.% SiO₂, for example from about 30 wt.% to about 40 wt.% SiO₂, based on the total weight of the geopolymer.

Preferably, the geopolymer comprises from about 0 wt.% to about 15 wt.% K₂O, for example from about 0 wt.% to about 12 wt.% K₂O, for example from about 0.5 wt.% to about 10 wt.% K₂O, for example from about 1.0 wt.% to about 8 wt.% K₂O , based on the total weight of the geopolymer.

Preferably, the geopolymer comprises from about 0.1 wt.% to about 5.0 wt.% Fe₂O₃, for example from about 0.1 wt.% to about 5.0 wt.% Fe₂O₃, for example from about 0.1 wt.% to about 3.0 wt.% Fe₂O₃, for example from about 0.2 wt.% to about 2.0 wt.% Fe₂O₃, based on the total weight of the geopolymer.

Preferably, the geopolymer comprises from about 0.1 wt.% to about 5.0 wt.% TiO₂, for example from about 0.1 wt.% to about 3.0 wt.% Fe₂O₃, for example from about 0.2 wt.% to about 2.0 wt.% Fe₂O₃, based on the total weight of the geopolymer.

Preferably, the geopolymer comprises from about 0.1 wt.% to about 5.0 wt.% CaO, for example from about 1.0 wt.% to about 4.0 wt.% CaO, for example from about 2.0 wt.% to about 3.0 wt.% CaO, based on the total weight of the geopolymer.

Preferably, the geopolymer contains from about 0 to about 5.0 wt.% MgO, for example from about 0 to about 3.0 wt.% MgO, for example from about 0.01 to about 2.0 wt.% MgO, based on the total weight of the geopolymer.

Preferably, the geopolymer comprises from about 0 wt.% to about 10 wt.% Na₂O, for example from about 0.1 wt.% to about 9 wt.% Na₂O, for example from about 1.0 wt.% to about 8 wt.% Na₂O, for example from about 1.0 wt.% to about 5 wt.% Na₂O, based on the total weight of the geopolymer.

Preferably, the geopolymer comprises from about 0 wt.% to about 2.0 wt.% P₂O₅, for example from about 0 wt.% to about 1.5 wt.% P₂O₅, for example from about 0.001 wt.% to about 0.5 wt.% P₂O₅, based on the total weight of the geopolymer.

In an embodiment, the geopolymer comprises one or more inorganic filler(s).

Unless explicitly mentioned to the contrary and/or the context dictates otherwise in the present disclosure the term "fillers" also encompasses a single type of filler.

In an embodiment, the total amount of one or more inorganic filler(s), based on the total weight of the geopolymer, is from about 1.0 wt.% to about 95 wt.%, for example from about 2.0 wt.% to about 90 wt.%, or from about 2.0 wt.% to about 80 wt.%,or from about 2.0 wt.% to about 70 wt.%, or from about 3.0 wt.% to about 60 wt.%, or from about 3.0 wt.% to about 50 wt.%, or from about 3.0 wt.% to about 40 wt.%, or from about 3.0 wt.% to about 30 wt.%, or from about 3.0 wt.% to about 20 wt.%, or from about 4.0 wt.% to about 15 wt.%, or from about 5.0 to about 15 wt.%.

In an embodiment, the one or more inorganic filler(s) comprise
∘ inorganic, non-metallic fillers; and optionally
∘ metallic fibres.

In an embodiment, the one or more inorganic filler(s) comprise(s) inorganic, non-metallic fillers selected from the group consisting of wollastonite, andesite, phonolite, silicates, silicas, graphite, quartz sands, silica fume, diatomaceous earth, talc, and fibres, for example natural or synthetic inorganic fibres, such as ceramic fibres, basalt fibres, glass fibres, carbon fibres, and mixtures thereof. For example, the inorganic, non-metallic fillers are selected from the group consisting of quartz, wollastonite, basalt fibres, carbon fibres and mixtures thereof. In an embodiment, the one or more inorganic filler(s) are free of aluminosilicate-containing compound(s).

In an embodiment, the total amount of one or more inorganic, non-metallic filler(s), based on the total weight of the geopolymer, is from about 1.0 wt.% to about 95 wt.%, for example from about 2.0 wt.% to about 90 wt.%, or from about 2.0 wt.% to about 80 wt.%,or from about 2.0 wt.% to about 70 wt.%, or from about 3.0 wt.% to about 60 wt.%, or from about 3.0 wt.% to about 50 wt.%, or from about 3.0 wt.% to about 40 wt.%, or from about 3.0 wt.% to about 30 wt.%, or from about 3.0 wt.% to about 20 wt.%, or from about 4.0 wt.% to about 15 wt.%, or from about 5.0 to about 15 wt.%.

The addition of metallic fibres may further increase the break-in resistance provided by the geopolymer. In case of concrete (which is cement based) the fire resistance usually deteriorates upon addition of metallic fibres, especially fibres with a length of more than 10 mm.

In an embodiment, the one or more inorganic filler(s) comprise(s) metallic fibres selected from the group consisting iron fibres, steel fibres, tungsten fibres, copper fibres, platinum fibres, brass fibres, zinc fibres, aluminium fibres, chromium fibres and mixtures thereof. For example, the metallic fibres are selected from the group consisting of iron fibres, steel fibres and mixtures thereof.

In case of non-fibrous inorganic fillers, the fillers are particulate material. In one embodiment, the maximum diameter of these fillers is less than about 1000 µm, for example less than about 900 µm, or less than about 800 µm or less than about 700 µm, or less than about 600 µm, or less than about 500 µm.

In one embodiment, the inorganic non-metallic fillers may be natural or synthetic inorganic fibres. In some embodiments, the natural or synthetic inorganic fibres have an average length from about 1.0 to about 50 mm, for example from about 2.5 to about 45 mm, or from about 5.0 to about 40 mm, or from about 7.5 to about 30 mm.

In one embodiment, inorganic non-metallic fillers may be natural or synthetic inorganic fibres. In some embodiments, the average diameter of the natural or synthetic inorganic fibres is from about 1.0 µm to about 200 µm, for example from about 2.0 µm to about 180 µm, or from about 3.0 to about 160 µm, or from about 4.0 µm to about 140 µm, or from about 5.0 µm to about 120 µm, or from about 7.0 µm to about 100 µm, or from about 8.0 µm to about 80 µm, or from about 9.0 µm to about 60 µm, or from about 10 µm to about 40 µm.

In an embodiment, the metallic fibres have an average length of from about 2.0 mm to about 50 mm, for example from about 5.0 mm to about 40 mm or from about 10 mm to about 35 mm or from about 11 mm to about 30 mm.

In one embodiment, the average diameter of the metallic fibres is from about 1.0 µm to about 500 µm, for example from about 2.0 µm to about 450 µm, or from about 3.0 to about 400 µm, or from about 4.0 µm to about 350 µm, or from about 5.0 µm to about 300 µm, or from about 7.0 µm to about 250 µm, or from about 8.0 µm to about 200 µm, or from about 9.0 µm to about 150 µm, or from about 10 µm to about 100 µm.

In an embodiment, the metallic fibres may be coated. For example, iron or steel fibres are usually coated, e.g., with copper, to avoid corrosion of the iron.

In an embodiment, the one or more inorganic filler(s) comprise
∘ inorganic, non-metallic fillers; and
∘ metallic fibres,
each as defined herein.

In an embodiment, the one or more inorganic filler(s) comprise inorganic, non-metallic fillers selected from the group consisting of quartz, wollastonite, basalt fibres and mixtures thereof and metallic fibres selected from the group consisting of iron fibres and steel fibres.

In an embodiment, the one or more inorganic filler(s) comprise inorganic, non-metallic fillers and metallic fibres as defined herein and the weight ratio between the inorganic, non-metallic fillers and the metallic fibres [inorganic, non-metallic fillers: metallic fibres] is from about 1:95 to about 99:1, for example is from about 40:60 to about 70:30, for example from about 45:55 to about 65:35, or from about 50:50 to about 60:40.

In an embodiment,
- the sum of the total amounts of Al₂O₃, SiO₂, K₂O, Na₂O, Li₂O, Fe₂O₃, TiO₂, CaO, MgO, and P₂O₅ make up at least about 85 wt.%, for example at least about 90 wt%, or at least about 99 wt.% of the geopolymer.
- the one or more inorganic filler(s) comprise:
   ∘ inorganic, non-metallic fillers; and
   ∘ metallic fibres,
   each as defined herein
- the total amount of inorganic fillers, based on the total weight of the geopolymer, is from about 2.0 wt.% to about 70 wt.% for example from about 3.0 wt.% to about 60 wt.%, or from about 3.0 wt.% to about 50 wt.% or from about 5.0 to about 20 wt.%; and
- the weight ratio between the inorganic, non-metallic fillers and the metallic fibres [inorganic, non-metallic fillers:metallic fibres] is from about 45:55 to about 65:35, for example from about 50:50 to about 60:40.
This embodiment has good fire resistance and break-in resistance.

### Process for preparing an anti-breaking element

The present disclosure is furthermore directed to a process for preparing an anti-breaking element, the process comprising:
a) providing the skeleton of an anti-breaking element;
b) preparing a geopolymer formulation;
c) casting the geopolymer formulation of step b) into or on the skeleton of the anti-breaking element of step a); and
d) optionally, removing the skeleton.

Features of the geopolymer formulation, the preparation thereof, the geopolymer, and the anti-breaking element described herein are also features of the process according to the present disclosure and vice versa.

Casting of a geopolymer formulation into a skeleton, *e.g.* a mould, and polymerizing thereof is generally known in the art and for example described in J. Davidovits (1st editor), Geopolymer Chemistry and Applications, Institut Geopolymere, Saint-Quentin, 5th Ed., March 2020; John L. Povis and Jannie S.J. Van Deventer, Geopolymers Structure, processing, properties and industrial applications, Woodhead Publishing Limited and CRC Press LLC, 2009; Liew Yun-Ming, Heah Cheng-Yong, Mohd, Mustafa Al Bakri, Kamarudin Hussin; Structure and properties of clay-based geopolymer cements: A review; Prog. Mater. Sci. 83 (2016), p. 596 -610, which contents are herewith incorporated by reference in their entirety.

In an embodiment, the geopolymer formulation is prepared according to a process comprising:
i.combining an alkaline composition comprising an alkaline metal silicate and preferably an alkali metal hydroxide, with at least one aluminosilicate; and
ii.optionally, adding one or more inorganic filler(s) as defined in the present disclosure.

In an embodiment, the aluminosilicate used in step i. is selected from the group consisting of metakaolin, fly ash, halloysite, metahalloysite, slag, calcined clay, kaolin, perlite, mica, feldspar, and mixtures thereof and mixtures thereof, for example the aluminosilicate used in step i. is selected from the group consisting of metakaolin, calcined clay, and perlite.

In an embodiment, the alkali metal silicate used in step i. is selected from the group consisting of Na, K, Li, silicates and mixtures thereof. In an embodiment, the alkali metal silicate used in step i. is selected from the group consisting of sodium silicate, sodium metasilicate (waterglass), potassium silicate, potassium metasilicate, lithium silicate, and mixtures thereof, such as potassium metasilicate, sodium metasilicate or mixtures thereof, *e.g.,* sodium metasilicate.

In an embodiment, the alkaline composition comprising an alkali metal silicate is a dry composition. In this embodiment, water may be added after combining the alkaline composition comprising an alkali metal silicate with the at least one aluminosilicate in step i.

In another, preferred embodiment, the alkaline composition comprising an alkali metal silicate is an aqueous composition. In this embodiment, water is already present when combining the alkaline composition comprising an alkali metal silicate with the at least one aluminosilicate in step i. If needed, further water may be added after combining the alkaline composition comprising an alkali metal silicate with the at least one aluminosilicate in step i.

In one embodiment, the total amount of alkali metal silicate used in step i., based on the total weight of the alkaline composition prepared in step i., is from about 2.5 wt.% to about 100 wt.%, for example from about 5.0 wt.% to about 90 wt.%, or from about 7.5 wt.% to about 80 wt.% or from about 10 to about 70 wt.% or from about 20 to about 60 wt.% or from about 30 to about 60 wt.% or from about 40 to about 60 wt.%.

In an embodiment, the alkaline composition prepared in step i. is aqueous and has a pH value of at least about 11, for example at least about 12, or at least about 13, or at least about 14.

In an embodiment, the alkaline composition prepared in step i. comprises an alkali metal hydroxide. In an embodiment, the alkali metal hydroxide is selected from the group consisting of NaOH, KOH, LiOH, and mixtures thereof. In an embodiment, the alkali metal hydroxide is selected from the group consisting of NaOH, KOH, and mixtures thereof, such as NaOH and KOH. In another embodiment, the total content of alkali metal hydroxides, for example NaOH and KOH, based on the total weight of the alkaline composition prepared in step i., is from about 5.0 wt.% to about 40 wt.%, for example from about 10 to about 35 wt.%, or from about 12.5 wt.% to about 32.5 wt.%, or from about 15 wt. % to about 30 wt.% or from about 18 wt.% to about 25 wt.%.

In an embodiment, the alkaline composition prepared in step i. comprises NaOH and KOH, for example in a weight ratio KOH:NaOH from about 2.5:1.0 to about 10.0:1.0, or from about 3.0:1.0 to about 9.0:1.0, or from about 3.5:1.0 to about 8.0:1.0 or from about 4.0:1.0 to about 7.0:1.0.

In an embodiment, the alkaline composition prepared in step i. is aqueous and the total water content thereof is from about 0.5 wt. to about 60 wt.%, for example from about 5.0 wt.% to about 50 wt.%, or from about 10.0 wt.% to about 40.0 wt.%, based on the total weight of the alkaline composition prepared in step i.

In an embodiment:
- the alkali metal silicate used in step i. is selected from the group consisting of sodium silicate, sodium metasilicate (waterglass), potassium silicate, potassium metasilicate, lithium silicate, and mixtures thereof;
- the total amount of alkali metal silicate used in step i., based on the total weight of the alkaline composition prepared in step i., is from about 2.5 wt.% to about 100 wt.%;
- the alkaline composition prepared in step i. is aqueous and has a pH value of at least about 11;
- the alkaline composition prepared in step i. comprises an alkali metal hydroxide selected from the group consisting of NaOH, KOH, and mixtures thereof;
- the total content of alkali metal hydroxides, selected from the group consisting of NaOH, KOH and mixtures thereof, such as NaOH and KOH, based on the total weight of the alkaline composition prepared in step i., is from about 10 to about 35 wt.%; and
- the total water content of the alkaline composition prepared in step i. is from about 0.5 wt.% to about 60 wt.% based on the total weight of the alkaline composition prepared in step i.

In yet another embodiment:
- the alkali metal silicate used in step i. is sodium metasilicate (waterglass);
- the total amount of alkali metal silicate used in step i., based on the total weight of the alkaline composition prepared in step i., is from about 20 to about 60 wt.%:
- the alkaline composition prepared in step i. is aqueous and has a pH value of at least about 12;
- the alkaline composition prepared in step i. comprises NaOH and KOH;
- the total content of NaOH and KOH, based on the total weight of the alkaline composition prepared in step i., is from about 15 wt.% to about 30 wt;
- the alkaline composition prepared in step i. comprises NaOH and KOH in a weight ratio KOH:NaOH from about 3.5:1.0 to about 8.0:1.0; and
- the total water content of the alkaline composition prepared in step i. is from about 10 wt.% to about 40 wt.%, based on the total weight of the alkaline composition prepared in step i.

In yet another embodiment:
- the alkali metal silicate used in step i. is sodium metasilicate (waterglass);
- the total amount of alkali metal silicate used in step i., based on the total weight of the alkaline composition prepared in step i., is from about 40 to about 60 wt.%:
- the alkaline composition prepared in step i. is aqueous and has a pH value of at least about 14;
- the alkaline composition prepared in step i. comprises NaOH and KOH;
- the total content of NaOH and KOH, based on the total weight of the alkaline composition prepared in step i., is from about 18 wt.% to about 25 wt;
- the alkaline composition prepared in step i. comprises NaOH and KOH in a weight ratio KOH:NaOH from about 4.0:1.0 to about 7.0:1.0; and
- the total water content of the alkaline composition prepared in step i. is from about 10 wt.% to about 40 wt.%, based on the total weight of the alkaline composition prepared in step i.

The preparation of the alkaline composition used in step i. is usually exothermic. Thus, in an embodiment, the evaporation of water from the vessel, wherein the reaction according to step i. is carried out, is essentially prevented. In this regard "essentially prevented" denotes that a small amount of water may be allowed to evaporate to avoid overpressure in the vessel.

In an embodiment, the weight ratio between the aluminosilicate used in step i. and the total weight of the alkaline composition prepared in step i., including water, if present in the alkaline composition, is from about 35/65 to about 80/20, for example, from about 40/60 to about 70/30, or from about 45/55 to about 50/50.

In an embodiment, the time between the end of step i. and the beginning of step ii. is at least 4 hours, for example at least 6 hours or at least 12 hours or at least 18 hours.

In an embodiment, in step ii., the one or more inorganic filler(s) as defined herein are added to the mixture obtained after step i.

In one embodiment, two or more inorganic fillers are added in step ii., whereby the inorganic fillers are added sequentially.

In an embodiment, the one or more inorganic filler(s) comprise
∘ inorganic, non-metallic fillers; and optionally
∘ metallic fibres,
each as defined herein,
wherein when the one or more inorganic filler(s) comprise metallic fibres, the inorganic, non-metallic fillers are added in step ii. prior to the metallic fibres.

In one embodiment, one or more of the inorganic filler(s) are combined with the aluminosilicate prior to combining the aluminosilicate with the alkaline composition in step i., for example, the one or more inorganic filler(s) are dry-mixed with the aluminosilicate and the mixture obtained is combined with the alkaline composition in step i. In one variant of this embodiment, the inorganic filler(s) which are combined with the aluminosilicate prior to combining the aluminosilicate with the alkaline composition in step i. consist of inorganic, non-metallic fillers.

In another embodiment, all inorganic fillers used for preparing the geopolymer are added after step i. has been carried out. In one embodiment, the inorganic, non-metallic filler(s), (*i.e.,* all inorganic, non-metallic fillers, in case two or more inorganic, non-metallic fillers are used) are added to the mixture obtained after step i. has been carried out, and metallic fibres, if used, are added in a subsequent, separate step.

In case two or more inorganic fillers are used and these inorganic fillers are added sequentially, a homogenising step is usually carried out after the addition of one inorganic filler and prior to the addition of the next inorganic filler.

In an embodiment, the process steps for preparing the geopolymer formulation are carried out at temperatures suitable for aqueous compositions, for example within a temperature range from about 5°C to about 90°C, for example from about 10°C to about 80°C, or from about 15°C to about 70°C, for example at room temperature, *i.e.,* 25°C.

The present disclosure is furthermore directed to an anti-breaking element according to the present disclosure prepared by the process according to the present disclosure.

### Use

The present disclosure is furthermore directed to the use of a geopolymer as described herein as part of an anti-breaking element.

In one embodiment, the anti-breaking element is fire resistant and/or burglary resistant as defined in the present disclosure.

Features of the geopolymer formulation, the preparation thereof, the geopolymer, the anti-breaking element, and the process described herein are also features of the use according to the present disclosure.

In certain embodiments, the anti-breaking element may have one or more of the following effects:
- good fire resistance;
- good break-in resistance (resistance to burglary);
- good combination of good fire resistance and good break-in resistance;
- excellent mechanical properties;
- improved fire resistance, break-in resistance and mechanical properties compared with concrete-based anti-breaking elements having the same or similar dimensions.

### Examples:

Aqueous, alkaline compositions were prepared comprising the following components:

| | |
|---|---|
| liquid sodium silicate¹⁾ | 47 to 57 wt. % |
| solid KOH | 15.5 to 19.5 wt.% |
| solid NaOH | 3.4 to 4.3 wt.% |
| Water | remainder |

| | |
|---|---|
| ¹⁾ solution containing a molar ratio of at least 3. | |

The liquid sodium silicate has been added to the water in a stirred vessel. The KOH and NaOH were added in totality. The use of the mixture is possible once the mixture cools down until ambient temperature due to exothermic reaction, occurring about 50-70°C. The mixture can be used at least 24h after cooling and kept to an appropriated vessel for ulterior formulation if decided to test after 24h of rest.

Each aqueous, alkaline composition was combined with an aluminosilicate suitable for geopolymers, in a weight ratio [aqueous, alkaline composition:aluminosilicate] of 45:55 to 55:45. After homogenizing the obtained mixtures, inorganic non-metallic fibres have been added, the resulting mixture has been homogenized and, subsequently, metallic fibres have been added and the resulting mixture has been homogenized. The amounts of inorganic non-metallic fibres and metallic fibres have been selected such that the weight of the inorganic non-metallic fibres is 6 to 8 wt.% and the weight of the metallic fibres is 5 to 6 wt.%, each based on the total weight of the composition after addition of the inorganic non-metallic fibres and metallic fibres.

The prepared compositions demonstrated interesting break-in resistances and fire resistances.

## Claims

1. An anti-breaking element comprising a geopolymer.

2. The anti-breaking element according to claim 1, wherein the anti-breaking element is a strong box element, a strong room element, an armoured door and/or an armoured wall.

3. The anti-breaking element according to claim 1 or claim 2, wherein the anti-breaking element is substantially free of calcium-silicate based cement and/or of calcium-aluminate based cement, *e.g.,* as a reinforcing agent or a fireproof agent.

4. The anti-breaking element according to any one of the preceding claims, having
- a fire resistance of at least S 60 P, as determined according to NF EN 1047-1:2019; and/or
- a resistance to burglary of at least a resistance grade 0 or at least of grade L, as determined according to NF EN 1143-1:2019.

5. The anti-breaking element according to any one of the preceding claims, wherein the geopolymer comprises one or more inorganic filler(s).

6. The anti-breaking element according to claim 5, wherein the one or more inorganic filler(s) comprise inorganic, non-metallic fillers; and/or metallic fibres.

7. The anti-breaking element according to claim 6, wherein the one or more inorganic filler(s) comprise inorganic, non-metallic fillers selected from the group consisting of wollastonite, andesite, phonolite, silicates, silicas, graphite, quartz sands, silica fume, diatomaceous earth, talc, and fibres, for example natural or synthetic inorganic fibres, such as ceramic fibres, basalt fibres, glass fibres, carbon fibres, and mixtures thereof.

8. The anti-breaking element according to claim 6 or 7, wherein the one or more inorganic filler(s) comprise metallic fibres selected from the group consisting of iron fibres, steel fibres, tungsten fibres, copper fibres, platinum fibres, brass fibres, zinc fibres, aluminium fibres, chromium fibres, and mixtures thereof.

9. The anti-breaking element according to any one of the preceding claims, wherein the geopolymer comprises:
i) from about 2 wt.% to about 30 wt.% Al₂O₃;
ii) from about 5 wt.% to about 70 wt.% SiO₂;
iii) from about 0 wt.% to about 15 wt.% K₂O;
iv) from about 0.1 wt.% to about 5.0 wt.% Fe₂O₃;
v) from about 0.1 wt.% to about 5.0 wt.% TiO₂;
vi) from about 0.1 wt.% to about 5.0 wt.% CaO;
vii) from about 0 wt.% to about 5.0 wt.% MgO;
viii) from about 0 wt.% to about 10 wt.% Na₂O; and/or
ix) from about 0 wt.% to about 2.0 wt.% P₂O₅, based on the total weight of the geopolymer.

10. A process for preparing an anti-breaking element, the process comprising:
a) providing the skeleton of an anti-breaking element;
b) preparing a geopolymer formulation;
c) casting the geopolymer formulation of step b) into or on the skeleton of the anti-breaking element of step a); and
d) optionally, removing the skeleton.

11. The process according to claim 10, wherein the geopolymer formulation of step b) is prepared according to a process comprising:
i.combining an alkaline composition comprising an alkaline metal silicate and preferably an alkali metal hydroxide, with at least one aluminosilicate; and
ii.optionally, adding one or more inorganic filler(s) as defined in any one of claims 8 to 10;

12. The process according to claim 11, wherein the aluminosilicate used in step i. is selected from the group consisting of metakaolin, fly ash, halloysite, metahalloysite, slag, calcined clay, kaolin, perlite, mica, feldspar and mixtures thereof.

13. The anti-breaking element according to any one of claims 1 to 9 prepared by the process according to any one of claims 10 to 12.

14. Use of a geopolymer as part of an anti-breaking element.

15. Use according to claim 14, wherein the anti-breaking element is fire resistant and/or burglary resistant.
